# EUROPÄISCHE PATENTSCHRIFT

(11) **EP 4 108 879 B1**
(45) Veröffentlichungstag und Bekanntmachung des Hinweises auf die Patenterteilung: **03.05.2023**
(21) Anmeldenummer: 21181133.6
(22) Anmeldetag: 23.06.2021
(51) Int. Cl.: E06B 1/52, F16B 5/02, E06B 1/36, E06B 1/60, E06B 3/968, E06B 3/28, E06B 3/54

(54) **BLENDENHALTERUNG ZUR FESTLEGUNG EINER BLENDE AN EINER TÜR- ODER FENSTERZARGE**
SCREEN SUPPORT FOR FIXING A SCREEN TO A DOOR OR WINDOW FRAME
SUPPORT DE BLINDAGE DESTINÉ À LA FIXATION D'UN BLINDAGE SUR UN CHÂSSIS DE PORTE OU DE FENÊTRE

(43) Veröffentlichungstag der Anmeldung: 28.12.2022
(73) Patentinhaber: Bartels Systembeschläge GmbH, 32689 Kalletal (DE)
(72) Erfinder: BARTELS, Albert, 32657 Lemgo (DE)
(74) Vertreter: Dantz, Jan Henning

(56) Entgegenhaltungen:
- EP-A2- 1 039 086
- DE-A1- 19 953 774
- US-A- 5 242 239

## Beschreibung

Die vorliegende Erfindung betrifft eine Blendenhalterung zur Festlegung einer Blende an einem oberen Bereich einer Tür- oder Fensterzarge unterhalb einer Gebäudedecke gemäß dem Oberbegriff des Anspruchs 1.

Insbesondere bei geschosshohen Türen oder Fenstern werden in einen oberen Bereich unterhalb einer Gebäudedecke feste Tür- oder Fensterblenden eingesetzt, um die bewegten Tür- oder Fensterblätter nicht zu groß werden zu lassen.

Diese Blenden werden üblicherweise unbeweglich mit den Tür- oder Fensterzargen verbunden. Die Montage dieser Blenden erfolgt in der Regel durch Einhängen der Blende in an der Türzarge angeordnete obere Befestigungszapfen. Am unteren Ende der Blende werden in eine Stirnseite von unten Blendenhalter eingeschraubt, die seitlich mit der Türzarge arretiert sind.

Diese Blendenhalter müssen dabei in einer Fräsung in der Blende eingesetzt werden, die länger ist als der Blendenhalter selbst, da nach dem Einsetzen des Blendenhalters in die Fräsung vor dem Verschrauben der Blendenhalter mit der Blende der Blendenhalter so in der Fräsung verschoben werden muss, dass der Zapfen in die dazu vorgesehene Ausnehmung in der Zarge eingeschoben ist.

Nachteilig bei diesem Aufbau ist, dass nach der Montage in der Blende ein Teil dieser Fräsausnehmung noch sichtbar ist.

Auch eine Ausrichtung eines solchen Blendenhalters, abgesehen von der Verschieberichtung des Blendenhalters in die Ausnehmung in der Zarge zur Aufnahme des Zapfens, ist mit einem solchen Blendenhalter nicht möglich.

Aus der US 5,242,239 ist eine nicht verstellbare Befestigungsmöglichkeit bekannt, bei der nach Fixierung eines Verbindungskörpers an der Tür- oder Fensterzarge die Blende vertikal auf den Verbindungskörper aufgeschoben werden kann. Der Verbindungskörper besteht dabei aus einer Führungsplatte und zwei an senkrecht zueinander ausgerichteten Kanten der Führungsplatte angeschweißten Halteplatten. Die Führungsplatte ist im montierten Zustand in einer vertikalen Nut in der Stirnfläche der Blende geführt. Eine untere horizontale Platte des Verbindungskörpers verhindert ein Durchrutschen der Blende. Anschließend wird der Verbindungskörper durch Aufsetzen einer Platte und Verschrauben der Platte mit dem Verbindungskörper vertikal festgelegt. Zur horizontalen Fixierung dienen Schrauben, die einserseits in den Verbindungskörper eingeschraubt und anderereseits durch horizontale Bohrungen in einer vertikalen Zwischenwand in der Blende durchgeführt und mit Muttern auf der Rückseite der Zwischenwand fixiert sind.

Aufgabe der vorliegenden Erfindung ist es, einen Blendenhalter zur Festlegung einer Blende in einer Tür- oder Fensterzarge bereitzustellen, die in einfacher Weise zu montieren und darüber hinaus in wenigstens einer zweiten Richtung verstellbar ist sowie ermöglicht, die Fräsausnehmungen der Blende vollständig zu verdecken.

Diese Aufgabe wird durch eine Blendenhalterung mit den Merkmalen des Anspruchs 1 gelöst.

Die erfindungsgemäße Blendenhalterung zur Festlegung einer Blende an einem oberen Bereich einer Tür- oder Fensterzarge unterhalb einer Gebäudedecke weist eine in eine Ausnehmung der Blende einlegbare und in eine Zapfenaufnahme der Tür- oder Fensterzarge in einer ersten Richtung vorschiebbare Arretierplatte mit einem an dieser angeformten, in die Zapfenaufnahme aufnehmbaren Zapfen auf.

Die Arretierplatte ist zwischen einer an der Blende festlegbaren Grundplatte und einer an der Grundplatte festlegbaren Deckplatte angeordnet.

Die Grundplatte und die Deckplatte sind dabei durch Klemmschrauben miteinander lösbar verbunden.

Die Arretierplatte ist bei gelösten Klemmschrauben in der ersten Richtung und wenigstens einer zweiten Richtung verstellbar und durch Anziehen der Klemmschrauben arretierbar.

Die Arretierplatte weist wenigstens ein sich in der ersten Richtung erstreckendes Langloch auf, durch das eine der Klemmschrauben geführt ist, wobei eine sich in einer zur ersten Richtung orthogonal ausgerichteten zweiten Richtung erstreckende Breite des Langlochs größer ist als ein Durchmesser der Klemmschraube.

Mit einer solchermaßen ausgebildeten Blendenhalterung ist in einfacher Weise eine Verstellung der Blende nicht nur in Einschubrichtung der Arretierplatte in die Zapfenaufnahme der Tür- oder Fensterzarge, sondern auch in einer zweiten Richtung ermöglicht.

Darüber hinaus wird die Ausnehmung der Blende durch die Deckplatte vollständig verdeckt.

Weiter ist die Arretierplatte verliergesichert zwischen der Grundplatte und der Deckplatte durch die durch das Langloch geführte eine der Klemmschrauben gesichert.

Vorteilhafte Ausführungsvarianten der Erfindung sind Gegenstand der Unteransprüche.

Durch die in ihrer Breite größere Bemessung des Langlochs in der Arretierplatte ist ermöglicht, bei verliergesicherter Arretierplatte diese bei gelösten Schrauben sowohl in der ersten Richtung, die der Vorschubrichtung des Zapfens in die Zapfenaufnahme der Tür- oder Fensterzarge entspricht, auch in einer zweiten Richtung auszurichten, so dass dadurch in einfacher Weise leicht abweichende Ausfräsungen in der Tür- oder Fensterzarge, die die Zapfenaufnahme bilden, ausgleichbar sind.

Gemäß einer Ausführungsvariante weist die Arretierplatte wenigstens eine Gewindebohrung auf, in der eine Verstellspindel aufgenommen ist, die sich in als Langlöcher ausgebildeten Lageröffnungen der Grundplatte und der Deckplatte abstützt, wobei durch Verdrehen der Verstellspindel die Arretierplatte in einer dritten Richtung verstellbar ist.

Die Ausrüstung der Blendenhalterung mit wenigstens einer solchen, bevorzugt zwei Verstellspindeln, ermöglicht auch eine Verstellung der Arretierplatte und damit des Zapfens in einer zu den beiden ersten Richtungen orthogonalen dritten Richtung.

Die Verstellspindel weist gemäß einer vorteilhaften Weiterbildung einen Gewindebereich und von diesem endseitig abgestufte Führungsbereiche auf, wobei die Führungsbereiche in die Lageröffnungen der Grundplatte und der Deckplatte vorstehen.

Dadurch ist eine zusätzliche Führung der Arretierplatte über die Verstellspindel an der Grundplatte und der Deckplatte gewährleistet.

Gemäß einer weiteren Ausführungsvariante ist die Arretierplatte in der ersten Richtung derart verschiebbar, dass der Zapfen in einer durch die erste Richtung und die zweite Richtung aufgespannten Ebene betrachtet zwischen einer vollständig zwischen der Grundplatte und der Deckplatte positionierten Stellung und einer vollständig außerhalb der Grundplatte und der Deckplatte positionierten Stellung verschiebbar ist.

Dies ermöglicht einen einfachen Einbau der Blende durch Einschwenken in eine durch die Tür- oder Fensterzarge aufgespannte Ebene.

Gemäß einer weiteren vorteilhaften Ausführungsvariante weist die Grundplatte wenigstens zwei Durchgangsöffnungen zur Aufnahme von Fixierelementen, insbesondere Befestigungsschrauben zur Fixierung der Grundplatte an der Blende auf.

Die Deckplatte weist dabei Durchgangsöffnungen auf, durch die die Befestigungsschrauben mit einem Werkzeug erreichbar sind.

Dadurch ist in einfacher Weise eine Fixierung der Blendenhalterung im fertig montierten Zustand ermöglicht, ohne dass die einzelnen Bauteile der Blendenhalterung nacheinander in die Ausnehmung der Blende eingesetzt werden und montiert werden müssen.

Gemäß einer weiteren bevorzugten Ausführungsvariante sind zwischen der Grundplatte und der Deckplatte Distanzhülsen angeordnet, durch die Schraubenhälse der Klemmschrauben durchgeführt sind und deren Länge so bemessen ist, dass bei angezogenen Klemmschrauben die Arretierplatte reibschlüssig fixiert ist.

Gemäß einer weiteren vorteilhaften Ausführungsvariante ist zwischen der Arretierplatte und der Grundplatte und zwischen der Arretierplatte und der Deckplatte jeweils eine Halteplatte angeordnet, wobei die Halteplatten wenigstens ein Lagerloch aufweisen, in dem einer der Führungsbereiche der wenigstens einen Verstellspindel aufgenommen ist sowie ein Langloch, durch das der Schraubenhals der Klemmschrauben durchgeführt ist.

Die Halteplatten und die dazwischen angeordnete Arretierplatte bilden dabei zusammen mit den Verstellspindeln eine Baueinheit, die zwischen der Grundplatte und der Deckplatte verschiebbar ist.

In einer vorteilhaften Weiterbildung weist zumindest die zwischen der Arretierplatte und der Deckplatte angeordnete Halteplatte wenigstens eine Eingriffsöffnung zu Aufnahme eines Werkzeugs auf, die eine Verschiebung der Baugruppe aus Halteplatten, Arretierplatte und Verstellspindeln relativ zur Grundplatte und der Deckplatte erleichtert.

Gemäß einer weiteren bevorzugten Ausgestaltung der erfindungsgemäßen Blendenhalterung ist auf einer der Arretierplatte abgewandten Seite der Deckplatte eine Abdeckplatte angeordnet.

Diese Abdeckplatte ist in einer bevorzugten Ausführungsvariante magnetisch an der Deckplatte gehalten.

Durch die Anordnung einer solchen Abdeckplatte an der Deckplatte ist in einfacher Weise eine weitere optische Optimierung der Blendenhalterung ermöglicht.

Nachfolgend werden bevorzugte Ausführungsbeispiele anhand der beiliegenden Zeichnungen näher erläutert. Es zeigen:
- Figur 1: eine schematische isometrische Explosionsdarstellung einer Ausführungsvariante einer erfindungsgemäßen Blendenhalterung,
- Figur 2: eine schematische Schnittdarstellung einer in einer Ausnehmung einer Türblende angeordneten Blendenhalterung mit in eine Zapfenaufnahme vorgeschobenem Zapfen der Arretierplatte und
- Figur 3: eine Draufsicht auf die Blendenhalterung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Blendenhalterung, Deckplatte, Arretierplatte, Grundplatte, Verstellspindel und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

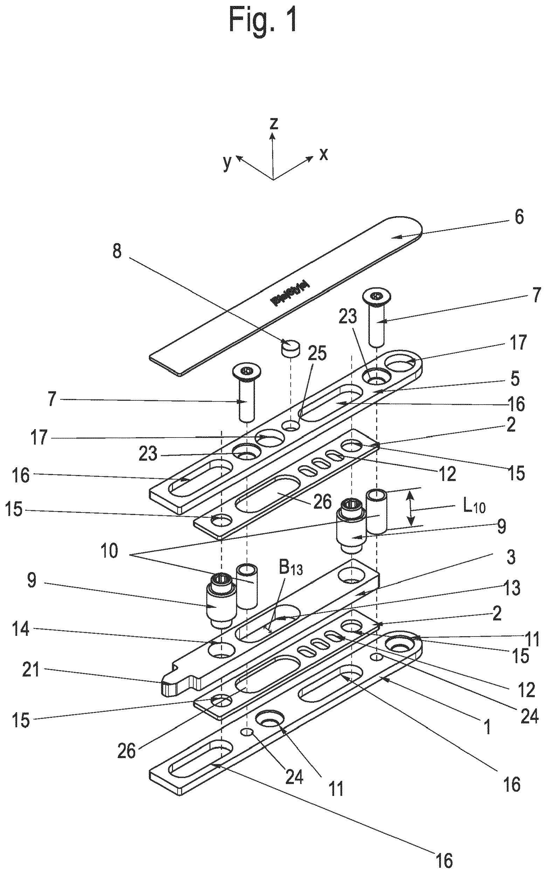

In Figur 1 ist eine Explosionsdarstellung einer Ausführungsvariante einer erfindungsgemäßen Blendenhalterung dargestellt.

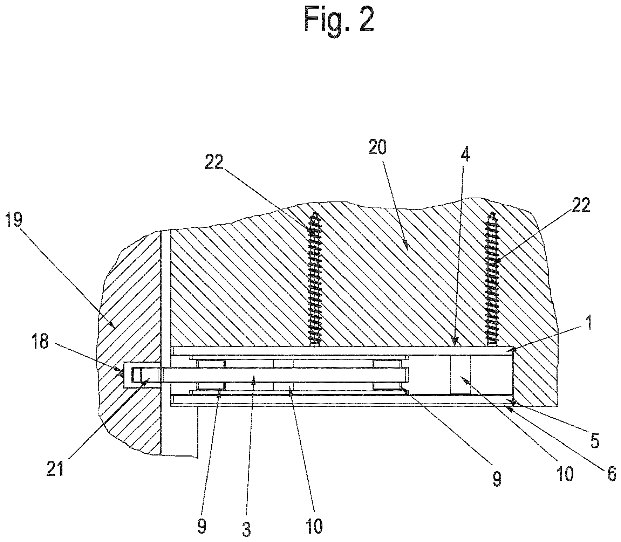

Die Blendenhalterung dient der Festlegung einer Blende 20 an einer Tür- oder Fensterzarge 19, wie es in Figur 2 dargestellt ist. Figur 2 zeigt dabei einen unteren linken Teilbereich der Blende 20 mit einer Ausnehmung 4, in den die Blendenhalterung eingesetzt und mit Befestigungsschrauben 22 montiert ist.

In Figur 2 links der Blende 20 ist ein Teilstück einer Tür- oder Fensterzarge 19 gezeigt, mit einer Zapfenaufnahme 18 zur Aufnahme eines Zapfens 21, der als Teil einer Arretierplatte 3 ausgebildet ist, an der der Zapfen 21, wie in Figur 1 beispielhaft dargestellt ist, angeformt ist.

Dementsprechend weist die Blendenhalterung eine in der Ausnehmung 4 in der Blende 20 einlegbare und in eine Zapfenaufnahme 18 der Tür- oder Fensterzarge 19 in einer ersten Richtung x vorschiebbare Arretierplatte 3 mit einem an dieser angeformtem, in die Zapfenaufnahme 18 aufnehmbarem Zapfen 21 auf.

Wie in den Figuren 1 und 2 weiter dargestellt ist, ist die Arretierplatte 3 zwischen einer an der Blende 20 festlegbaren Grundplatte 1 und einer an der Grundplatte 1 festlegbaren Deckplatte 5 angeordnet.

Die Grundplatte 1 und die Deckplatte 5 sind durch Klemmschrauben 7 miteinander lösbar verbunden.

Die Arretierplatte 3 ist bei gelösten Klemmschrauben 7 in der ersten Richtung x und wenigstens einer zweiten Richtung y verstellbar und durch Anziehen der Klemmschraube 7 arretierbar.

Wie in Figur 1 des Weiteren dargestellt ist, weist die Arretierplatte 3 wenigstens ein sich in der ersten Richtung x erstreckendes Langloch 13 auf, durch das eine der Klemmschrauben 7 geführt ist.

Dadurch ist die Arretierplatte 3 verliergesichert zwischen der Grundplatte 1 und der Deckplatte 5 gehalten.

Die Breite B₁₃ des Langlochs 13 ist dabei zur Ermöglichung einer Ausrichtung der Arretierplatte 3 relativ zur Grundplatte 1 und Deckplatte 5 in einer zweiten Richtung y, die sich orthogonal zur ersten Richtung x erstreckt, größer als ein Durchmesser der Klemmschraube 7.

Die zweite der Klemmschrauben 7 ist beabstandet von der dem Zapfen 21 abgewandten Seite der Arretierplatte 3 an der Arretierplatte 3 vorbei direkt durch die Deckplatte 5 in die Grundplatte 1 eingeschraubt.

Die Klemmschraube 7 weist zur Klemmfixierung einen Schraubenkopf 72 auf, der in einer dazu vorgesehenen Klemmschraubenaufnahme 23 vollständig eintauchbar ist, und einen Schraubenhals, dessen freies Ende in eine Gewindebohrung 24 in der Grundplatte 1 einschraubbar ist, auf.

Wie in den Figuren 1 und 2 weiter dargestellt ist, ist der Schraubenhals bei der hier gezeigten bevorzugten Ausführungsvariante der Blendenhalterung durch eine Distanzhülse 10 durchgeführt. Die stirnseitigen Enden der Distanzhülsen 10 liegen dabei auf der ihnen jeweils zugewandten Seite der Grundplatte 1 und der Deckplatte 5 auf. Die Länge der Distanzhülsen 10 ist dabei so bemessen, dass bei angezogenen Klemmschrauben 7 die Arretierplatte 3 reibschlüssig fixiert ist.

Wie weiter in den Figuren 1 und 2 erkennbar ist, weist die Arretierplatte 3 wenigstens eine Gewindebohrung 14 auf, in der dargestellten Ausführungsvariante zwei solcher Gewindebohrungen 14, in der jeweils eine Verstellspindel 9 aufgenommen ist, die sich in als Langlöcher ausgebildeten Lageröffnungen 16 der Grundplatte 1 und der Deckplatte 5 abstützt.

Durch Verdrehen der Verstellspindel(n) 9 ist die Arretierplatte 3 in einer dritten Richtung z, die orthogonal zur ersten Richtung x und der zweiten Richtung y ausgerichtet ist, und die in der hier dargestellten Anwendung üblicherweise die vertikale Richtung ist, verstellbar.

Durch die Anordnung solcher Verstellspindeln 9 ist die Blendenhalterung damit dreidimensional verstellbar und ermöglicht so eine exakte Ausrichtung der Blende 20 relativ zur Tür- oder Fensterzarge 19.

Die Verstellspindels 9 weisen einen Gewindebereich 91 und von diesem endseitig abgestufte Führungsbereiche 92 auf. Der Gewindebereich 91 ist dabei in der Gewindebohrung 14 der Arretierplatte 3 eingeschraubt.

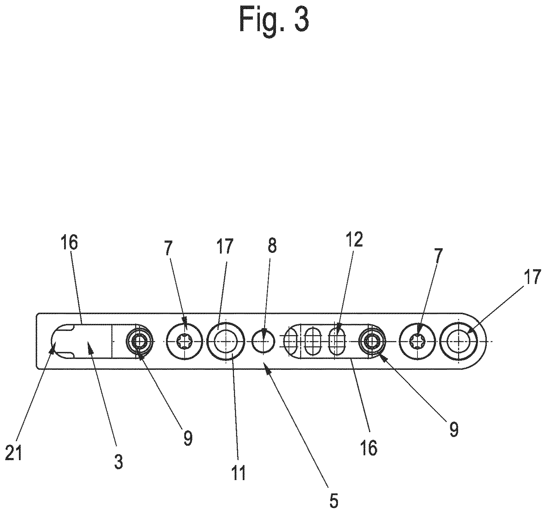

Die Führungsbereiche 92 beidseits des Gewindebereiches 91 stehen in jeweilige Lageröffnungen 16 der Grundplatte 1 und der Deckplatte 5 vor, wie es beispielsweise auch in Figur 3 zu erkennen ist. Über die Lageröffnung 16 in der Deckplatte 5 ist die Verstellspindel 9 darüber hinaus mit einem Drehwerkzeug betätigbar, um die Arretierplatte 3 und mit dieser den Zapfen 21 auf die gewünschte Position in z-Richtung einzustellen.

Die Lageröffnung 16 in der Grundplatte 1 und der Deckplatte 5 sowie das Langloch 13 in der Arretierplatte 3 ermöglichen eine Verschiebung des Zapfens 21, in einer durch die erste Richtung x und die zweite Richtung y aufgespannten Ebene betrachtet, zwischen einer vollständig zwischen der Grundplatte 1 und der Deckplatte 5 positionierten Stellung und einer vollständig außerhalb der Grundplatte 1 und der Deckplatte 5 positionierten Stellung.

In der erstgenannten Stellung, bei der der Zapfen 21 vollständig zwischen der Grundplatte 1 und der Deckplatte 5 positioniert ist, kann die Blendenhalterung in die dazu vorgesehene Ausnehmung 4 in der Blende 20 eingesetzt und mithilfe der Befestigungsschrauben 22, die durch Durchgangsöffnungen 11 der Grundplatte 1 durchgeführt sind und über Durchgangsöffnungen 17 in der Deckplatte 5 im in die Ausnehmung 4 eingesetzten Zustand der Blendenhalterung erreichbar sind, fixiert werden.

Die Blende 20 wird sodann über hier nicht dargestellte und an sich aus dem Stand der Technik bekannte obere Befestigungszapfen in die Tür- oder Fensterzarge 19 eingehängt, wobei beim Einhängen die Blende 20 in einem unteren Bereich, in dem die erfindungsgemäße Blendenhalterung in die Blende 20 eingesetzt ist, in y-Richtung aus der durch die Tür- oder Fensterzarge 19 aufgespannte gedachte Ebene vorsteht.

Nach dem anschließenden Einschwenken der Blende 20 in die Ebene der Tür- oder Fensterzarge 19 kann die Arretierplatte 3 aus ihrer Position, bei der der Zapfen vollständig zwischen der Grundplatte 1 und der Deckplatte 5 positioniert ist, in der ersten Richtung x in die außerhalb der Grundplatte 1 und der Deckplatte 5 positionierte Stellung in die Zapfenaufnahme 18 der Tür- oder Fensterzarge 19 verschoben werden.

Insbesondere zur Erhöhung der Andruckfläche ist, wie in den Figuren 1 und 2 dargestellt ist, zwischen der Arretierplatte 3 und der Grundplatte 1 und zwischen der Arretierplatte 3 und der Deckplatte 5 jeweils eine Halteplatte 2 angeordnet.

Die Halteplatten 2 weisen wenigstens ein Lagerloch 15 auf, in dem einer der Führungsbereiche 92 der wenigstens einen Verstellspindel 9 aufgenommen ist sowie ein Langloch 13, durch das der Schraubenhals 71 der Klemmschraube 7 bzw. die den Schraubenhals 71 umgebende Distanzhülse 10 durchgeführt ist.

Die zwischen der Arretierplatte 3 und der Deckplatte 5 angeordnete Halteplatte 2 weist des Weiteren wenigstens eine Eingriffsöffnung 12 auf, die der Aufnahme eines Werkzeugs dient, um in einfacher Weise eine Verschiebung der Baugruppe aus Halteplatten 2, Arretierplatte 3 und Verstellspindeln 9 relativ zur Grundplatte 1 und der Deckplatte 5 zu ermöglichen.

Bei der hier gezeigten Ausführungsvariante sind mehrere solcher Eingriffsöffnungen 12, hier insgesamt drei Eingriffsöffnungen 12 vorgesehen. Die Eingriffsöffnungen 12 sind, wie in Figur 3 zu erkennen ist, durch die Lageröffnung 16 in der Deckplatte 5 gut zu erreichen. Denkbar sind auch mehr oder weniger als drei solcher Eingriffsöffnungen 12. Denkbar sind auch andere Geometrien der Eingriffsöffnungen 12 als die hier dargestellte Schlitzform.

Wie weiter in den Figuren 1 und 2 gezeigt ist, ist auf einer der Arretierplatte 3 abgewandten Seite der Deckplatte 5 eine Abdeckplatte 6 angeordnet, mit einer zur Sichtseite geschlossenen Oberfläche.

Zur Halterung der Abdeckplatte 6 an der Deckplatte 5 dient in der hier gezeigten bevorzugten Ausführungsvariante ein Magnet 8, der in einer dazu vorgesehenen Magnetaufnahme 25 in der Deckplatte 5 aufgenommen ist.

Die Abdeckplatte 6 besteht dabei entsprechend bevorzugt aus einem magnetischen Material. Denkbar sind auch andere Fixiermöglichkeiten wie Kleben, Schrauben oder dergleichen.

### Bezugszeichenliste

- 1: Grundplatte
- 2: Halteplatte
- 3: Arretierplatte
- 4: Ausnehmung
- 5: Deckplatte
- 6: Abdeckplatte

- 7: Klemmschraube
- 71: Schraubenhals
- 72: Schraubenkopf

- 8: Magnet

- 9: Verstellspindel
- 91: Gewindebereich
- 92: Führungsbereich

- 10: Distanzhülse
- 11: Durchgangsöffnung
- 12: Eingriffsöffnung
- 13: Langloch
- 14: Gewindebohrung
- 15: Lagerloch
- 16: Lageröffnung
- 17: Durchgangsöffnung
- 18: Zapfenaufnahme
- 19: Tür- oder Fensterzarge
- 20: Blende
- 21: Zapfen
- 22: Befestigungsschraube
- 23: Klemmschraubenaufnahme
- 24: Gewindebohrung
- 25: Magnetaufnahme
- 26: Langloch

- x: erste Richtung
- y: zweite Richtung
- z: dritte Richtung
- B₁₃: Breite des Langlochs
- L₁₀: Länge der Distanzhülse

## Patentansprüche

1. Blendenhalterung zur Festlegung einer Blende (20) an einem oberen Bereich einer Tür- oder Fensterzarge (19) unterhalb einer Gebäudedecke, aufweisend
- eine in eine Ausnehmung (4) der Blende (20) einlegbare und in eine Zapfenaufnahme (18) der Tür- oder Fensterzarge (19) in einer ersten Richtung (x) vorschiebbare Arretierplatte (3) mit einem an dieser angeformtem, in die Zapfenaufnahme (18) aufnehmbarem Zapfen (21),
- wobei die Arretierplatte (3) zwischen einer an der Blende (20) festlegbaren Grundplatte (1) der Blendenhalterung und einer an der Grundplatte (1) festlegbaren Deckplatte (5) der Blendenhalterung angeordnet ist,
- wobei die Grundplatte (1) und die Deckplatte (5) durch Klemmschrauben (7) miteinander lösbar verbunden sind,
**dadurch gekennzeichnet, dass**
- die Arretierplatte (3) bei gelösten Klemmschrauben (7) in der ersten Richtung (x) und wenigstens einer zweiten Richtung (y) verstellbar und durch Anziehen der Klemmschrauben (7) arretierbar ist,
- wobei die Arretierplatte (3) wenigstens ein sich in der ersten Richtung (x) erstreckendes Langloch (13) aufweist, durch das eine der Klemmschrauben (7) geführt ist, wobei eine sich in einer zur ersten Richtung (x) orthogonal ausgerichteten zweiten Richtung (y) erstreckenden Breite (B13) des Langlochs (13) größer ist als ein Durchmesser der Klemmschraube (7).

2. Blendenhalterung nach Anspruch 1, **dadurch gekennzeichnet, dass** die Arretierplatte (3) wenigstens eine Gewindebohrung (14) aufweist, in der eine Verstellspindel (9) aufgenommen ist, die sich in als Langlöcher ausgebildeten Lageröffnungen (16) der Grundplatte (1) und der Deckplatte (5) abstützt, wobei durch Verdrehen der Verstellspindel (9) die Arretierplatte (3) in einer dritten Richtung (z) verstellbar ist.

3. Blendenhalterung nach Anspruch 2, **dadurch gekennzeichnet, dass** die Verstellspindel (9) einen Gewindebereich (91) und von diesem endseitig abgestufte Führungsbereiche (92) aufweist, wobei die Führungsbereiche (92) in die Lageröffnungen (16) der Grundplatte (1) und der Deckplatte (5) vorstehen.

4. Blendenhalterung nach einem der vorstehenden Ansprüche, **dadurch gekennzeichnet, dass** die Arretierplatte (3) in der ersten Richtung (x) derart verschiebbar ist, dass der Zapfen (21) in einer durch die erste Richtung (x) und die zweite Richtung (y) aufgespannten Ebene betrachtet zwischen einer vollständig zwischen der Grundplatte (1) und der Deckplatte (5) positionierten Stellung und einer vollständig außerhalb der Grundplatte (1) und der Deckplatte (5) positionierten Stellung verschiebbar ist.

5. Blendenhalterung nach einem der vorstehenden Ansprüche, **dadurch gekennzeichnet, dass** die Grundplatte (1) wenigstens zwei Durchgangsöffnungen (11) zur Aufnahme von Fixierelementen, insbesondere Befestigungsschrauben (22), zur Fixierung der Grundplatte (1) an der Blende (20) aufweist, wobei die Deckplatte (5) Durchgangsöffnungen (17) aufweist, durch die die Befestigungsschrauben (22) mit einem Werkzeug erreichbar sind.

6. Blendenhalterung nach einem der vorstehenden Ansprüche, **dadurch gekennzeichnet, dass** zwischen der Grundplatte (1) und der Deckplatte (5) Distanzhülsen (10) angeordnet sind, durch die Schraubenhälse (71) der Klemmschrauben (7) durchgeführt sind und deren Länge (L₁₀) so bemessen ist, dass bei angezogenen Klemmschrauben (7) die Arretierplatte (3) reibschlüssig fixiert ist.

7. Blendenhalterung nach einem der vorstehenden Ansprüche, **dadurch gekennzeichnet, dass** zwischen der Arretierplatte (3) und der Grundplatte (1) und zwischen der Arretierplatte (3) und der Deckplatte (5) jeweils eine Halteplatte (2) angeordnet ist, wobei die Halteplatten (2) wenigstens ein Lagerloch (15) aufweisen, in dem einer der Führungsbereiche (92) der wenigstens einen Verstellspindel (9) aufgenommen ist sowie ein Langloch (13), durch das der Schraubenhals (71) der Klemmschrauben (7) durchgeführt ist.

8. Blendenhalterung nach Anspruch 7, **dadurch gekennzeichnet, dass** zumindest die zwischen der Arretierplatte (3) und der Deckplatte (5) angeordnete Halteplatte (2) wenigstens eine Eingriffsöffnung (12) zu Aufnahme eines Werkzeugs aufweist, zur Verschiebung der Baugruppe aus Halteplatten (2), Arretierplatte (3) und Verstellspindeln (9) relativ zur Grundplatte (1) und der Deckplatte (5).

9. Blendenhalterung nach einem der vorstehenden Ansprüche, **dadurch gekennzeichnet, dass** auf einer der Arretierplatte (3) abgewandten Seite der Deckplatte (5) eine Abdeckplatte (6) angeordnet ist.

10. Blendenhalterung nach Anspruch 9, **dadurch gekennzeichnet, dass** die Abdeckplatte (6) magnetisch an der Deckplatte (5) gehalten ist.

## Claims

1. Panel holder for securing a panel (20) to an upper portion of a door or window frame (19) below a building ceiling comprising
- a locking plate (3) which can be inserted into a recess (4) in the panel (20) and can be pushed forward in a first direction (x) into a peg receptacle (18) in the door or window frame (19) and has a peg (21) which is integrally formed thereon and can be received in the peg receptacle (18),
- wherein the locking plate (3) is arranged between a base plate (1) of the panel holder which can be fixed to the panel (20) and a cover plate (5) of the panel holder which can be fixed to the base plate (1),
- wherein the base plate (1) and the cover plate (5) are detachably connected to each other by clamping screws (7),
**characterized in that**
- the locking plate (3) is adjustable in the first direction (x) and at least one second direction (y) when the clamping screws (7) are loosened and can be locked by tightening the clamping screws (7),
- wherein the locking plate (3) has at least one elongated hole (13) extending in the first direction (x), through which one of the clamping screws (7) is guided, wherein a width (B13) of the elongated hole (13) extending in a second direction (y) oriented orthogonally to the first direction (x) is greater than a diameter of the clamping screw (7).

2. Panel holder according to claim 1, **characterized in that** the locking plate (3) has at least one threaded bore (14) in which an adjusting spindle (9) is accommodated, which is supported in bearing openings (16) of the base plate (1) and the cover plate (5) formed as elongated holes, the locking plate (3) being adjustable in a third direction (z) by turning the adjusting spindle (9).

3. Panel holder holder according to claim 2, **characterized in that** the adjusting spindle (9) has a threaded portion (91) and guide portions (92) stepped from the threaded portion at the ends, the guide portions (92) projecting into the bearing openings (16) of the base plate (1) and the cover plate (5).

4. Panel holder according to one of the preceding claims, **characterized in that** the locking plate (3) is displaceable in the first direction (x) in such a way that the peg (21) is displaceable in a plane spanned by the first direction (x) and the second direction (y) as viewed between a position positioned completely between the base plate (1) and the cover plate (5) and a position positioned completely outside the base plate (1) and the cover plate (5).

5. Panel holder according to one of the preceding claims, **characterized in that** the base plate (1) has at least two through-openings (11) for receiving fixing elements, in particular fixing screws (22), for fixing the base plate (1) to the panel (20), the cover plate (5) having through-openings (17) through which the fixing screws (22) can be reached with a tool.

6. Panel holder according to one of the preceding claims, **characterized in that** spacer sleeves (10) are arranged between the base plate (1) and the cover plate (5), through which screw necks (71) of the clamping screws (7) are passed and whose length (L₁₀ ) is dimensioned such that, when the clamping screws (7) are tightened, the locking plate (3) is fixed in a frictionally engaged manner.

7. Panel holder according to one of the preceding claims, **characterized in that** a holding plate (2) is arranged between the locking plate (3) and the base plate (1) and between the locking plate (3) and the cover plate (5), the holding plates (2) having at least one bearing hole (15) in which one of the guide portions (92) of the at least one adjusting spindle (9) is accommodated and an elongated hole (13) through which the screw neck (71) of the clamping screws (7) is passed.

8. Panel holder according to claim 7, **characterized in that** at least the holding plate (2) arranged between the locking plate (3) and the cover plate (5) has at least one engagement opening (12) for receiving a tool, for displacing the assembly of holding plates (2), locking plate (3) and adjusting spindles (9) relative to the base plate (1) and the cover plate (5).

9. Panel holder according to one of the preceding claims, **characterized in that** a cover plate (6) is arranged on a side of the cover plate (5) facing away from the locking plate (3).

10. Panel holder according to claim 9, **characterized in that** the cover plate (6) is magnetically held on the cover plate (5).

## Revendications

1. Support de blindage pour la fixation d'un blindage (20) sur une région supérieure d'un châssis de porte ou de fenêtre (19) en-dessous d'un plafond de bâtiment, comportant
- une plaque d'arrêt (3) qui peut être introduite dans un creux (4) du blindage (20) et avancée dans un réceptacle de goujon (18) du châssis de porte ou de fenêtre (19) dans une première direction (x), munie d'un goujon (21) formé d'une pièce avec elle et pouvant être reçu dans le réceptacle de goujon (18),
- laquelle plaque d'arrêt (3) est disposée entre une plaque de fond (1) du support de blindage qui peut être fixée sur le blindage (20) et une plaque de couverture (5) du support de blindage qui peut être fixée sur la plaque de fond (1),
- la plaque de fond (1) et la plaque de couverture (5) étant assemblées l'une à l'autre par des vis de serrage (7) d'une manière pouvant être défaite,
**caractérisé en ce que**
- la plaque d'arrêt (3) peut être déplacée dans la première direction (x) et au moins une deuxième direction (y) quand les vis de serrage (7) sont desserrées et arrêtée par le serrage des vis de serrage (7),
- la plaque d'arrêt (3) présente a moins un trou oblong (13) qui s'étend dans la première direction (x), à travers lequel une des vis de serrage (7) est passée, une largeur (B 13) du trou oblong (13) orientée perpendiculairement à la première direction (x) étant plus grande que le diamètre de la vis de serrage (7).

2. Support de blindage selon la revendication 1, **caractérisé en ce que** la plaque d'arrêt (3) présente au moins un trou fileté (14) dans lequel est logée une tige de déplacement (9) qui s'appuie dans des ouvertures de palier (16) de la plaque de fond (1) et de la plaque de couverture (5) conçues comme des trous oblongs, la rotation de la tige de déplacement (9) permettant de déplacer la plaque d'arrêt (3) dans une troisième direction (z).

3. Support de blindage selon la revendication 2, **caractérisé en ce que** la tige de déplacement (9) présente une partie filetée (91) et des parties de guidage (92) formant des gradins aux extrémités de celle-ci, lesquelles parties de guidage (92) dépassent dans les ouvertures de palier (16) de la plaque de fond (1) et de la plaque de couverture (5).

4. Support de blindage selon l'une des revendications précédentes, **caractérisé en ce que** la plaque d'arrêt (3) est capable de translation dans la première direction (x) de telle manière que le goujon (21) est capable de translation, vu dans un plan défini par la première direction (x) et la deuxième direction (y), entre une position dans laquelle il est placé entièrement entre la plaque de fond (1) et la plaque de couverture (5) et une position dans laquelle il est entièrement sorti de la plaque de fond (1) et de la plaque de couverture (5).

5. Support de blindage selon l'une des revendications précédentes, **caractérisé en ce que** la plaque de fond (1) présente au moins deux ouvertures traversantes (11) destinées à recevoir des éléments de fixation, en particulier des vis de fixation (22), pour la fixation de la plaque de fond (1) sur le blindage (20), la plaque de couverture (5) présentant des ouvertures traversantes (17) à travers lesquelles les vis de fixation (22) peuvent être atteintes avec un outil.

6. Support de blindage selon l'une des revendications précédentes, **caractérisé en ce que** sont disposées entre la plaque de fond (1) et la plaque de couverture (5) des douilles d'écartement (10) à travers lesquelles les collets de vis (71) des vis de serrage (7) sont passés et dont la longueur (L₁₀) est dimensionnée de telle manière que la plaque d'arrêt (3) soit fixée par friction quand les vis de serrage (7) sont serrées.

7. Support de blindage selon l'une des revendications précédentes, **caractérisé en ce qu'**une plaque de maintien (2) est disposée entre la plaque d'arrêt (3) et la plaque de fond (1) et une autre entre la plaque d'arrêt (3) et la plaque de couverture (5), les plaques de maintien (2) présentant chacune un trou de palier (15) dans lequel une des parties de guidage (92) de l'au moins une tige de déplacement (9) est logée, ainsi qu'un trou oblong (13) à travers lequel le collet de vis (71) des vis de serrage (7) est passé.

8. Support de blindage selon la revendication 7, **caractérisé en ce que** la plaque de maintien (2) disposée entre la plaque d'arrêt (3) et la plaque de couverture (5), au moins, présente au moins une ouverture de prise (12) destinée à recevoir un outil, en vue de la translation du groupe formé par les plaques de maintien (2), la plaque d'arrêt (3) et les tiges de déplacement (9) par rapport à la plaque de fond (1) et à la plaque de couverture (5).

9. Support de blindage selon l'une des revendications précédentes, **caractérisé en ce qu'**une plaque de couverture (6) est disposée sur le côté de la plaque de couverture (5) opposé à la plaque d'arrêt (3).

10. Support de blindage selon la revendication 9, **caractérisé en ce que** la plaque de couverture (6) est retenue de façon magnétique sur la plaque de couverture (5).
